# EUROPEAN PATENT APPLICATION

(11) **EP 3 142 396 A1**
(43) Date of publication of application: **15.03.2017**
(21) Application number: 15789413.0
(22) Date of filing: 08.05.2015
(51) Int. Cl.: H04W 8/00, H04W 72/04, H04W 92/18

(54) **MOBILE COMMUNICATION SYSTEM, USER TERMINAL AND PROCESSOR**

(30) Priority: 09.05.2014 US 201461991030 P
(71) Applicant: Kyocera Corporation, Kyoto-shi, Kyoto 612-8501 (JP)
(72) Inventor: MATSUMOTO, Naohisa, Kyoto-shi Kyoto 612-8501 (JP); FUKUTA, Noriyoshi, Kyoto-shi Kyoto 612-8501 (JP)
(74) Representative: Schwabe - Sandmair - Marx
(86) International application number: PCT/JP2015/063377
(87) International publication number: WO 2015/170767

(57) **Abstract**

In a mobile communication system according to the present embodiment, a discovery resource pool in which a discovery resource for a D2D discovery procedure for discovering a proximal terminal is arranged is provided in a frequency band for uplink cellular communication. The discovery resource pool includes a first discovery resource pool in which a first discovery resource not uniquely assigned to a user terminal is arranged and a second discovery resource pool in which a second discovery resource uniquely assigned to each user terminal is arranged. The first discovery resource pool and the second discovery resource pool are arranged alternately in a time direction in a time interval shorter than a retransmission interval of the uplink cellular communication.

## Description

### TECHNICAL FIELD

Embodiements of the present disclosure relate to a mobile communication system, a user terminal, and a processor used in a mobile communication system that supports D2D communication that is direct Device-to-Device communication.

### BACKGROUND ART

In 3GPP (3rd Generation Partnership Project) which is a project aiming to standardize a mobile communication system, the introduction of Device to Device (D2D) proximity service is discussed as a new function after Release 12 (see Non Patent Document 1).

The D2D proximity service (D2D ProSe) is a service enabling direct Device-to-Device communication within a synchronization cluster including a plurality of synchronized user terminals. The D2D proximity service includes a D2D discovery procedure (Discovery) for discovering a proximal terminal and D2D communication (Communication) that is direct Device-to-Device communication.

Types of the D2D discovery procedure include: a first discovery type (Type 1 discovery) in which a radio resource not uniquely assigned to the UE 100 is used for transmitting a Discovery signal; and a second discovery type (Type 2 discovery) in which a radio resource uniquely assigned to each UE 100 is used for transmitting a Discovery signal.

### PRIOR ART DOCUMENTS

### NON PATENT DOCUMENT

Non Patent Document 1: 3GPP technical report "TR 36.843 V12.0.1" March 27, 2014

### SUMMARY

Here, it is assumed that a discovery resource pool in which a first discovery resource and a second discovery resource are arranged is provided in a frequency band for uplink cellular communication.

However, currently, how a discovery resource pool is arranged in a frequency band for uplink cellular communication is not yet determined, and it is required to appropriately arrange a discovery resource pool.

Therefore, an object of the present application is to enable appropriate arrangement of a discovery resource pool arranged in a frequency band for uplink cellular communication.

A mobile communication system according to an embodiment supports D2D communication that is direct Device-to-Device communication. A discovery resource pool in which a discovery resource for a D2D discovery procedure for discovering a proximal terminal is arranged is provided in a frequency band for uplink cellular communication. The discovery resource pool includes a first discovery resource pool in which a first discovery resource not uniquely assigned to a user terminal is arranged and a second discovery resource pool in which a second discovery resource uniquely assigned to each user terminal is arranged. The first discovery resource pool and the second discovery resource pool are arranged alternately in a time direction in a time interval shorter than a retransmission interval of the uplink cellular communication.

### BRIEF DESCRIPTION OF DRAWINGS

Fig. 1 is a configuration diagram of an LTE system according to an embodiment.
Fig. 2 is a block diagram of a UE according to the embodiment.
Fig. 3 is a block diagram of an eNB according to the embodiment.
Fig. 4 is a protocol stack diagram according to the embodiment.
Fig. 5 is a configuration diagram of a radio frame according to the embodiment.
Fig. 6 is a diagram for describing a discovery resource pool according to the embodiment.
Fig. 7 is a diagram for describing a discovery resource pool (pattern 1) according to additional statement.
Fig. 8 is a diagram for describing a discovery resource pool (pattern 2) according to the additional statement.

### DESCRIPTION OF THE EMBODIMENT

### [Overview of Embodiment]

In a mobile communication system according to an embodiment, a discovery resource pool in which a discovery resource for a D2D discovery procedure for discovering a proximal terminal is arranged is provided in a frequency band for uplink cellular communication. The discovery resource pool includes a first discovery resource pool in which a first discovery resource not uniquely assigned to a user terminal is arranged and a second discovery resource pool in which a second discovery resource uniquely assigned to each user terminal is arranged. The first discovery resource pool and the second discovery resource pool are arranged alternately in a time direction in a time interval shorter than a retransmission interval of the uplink cellular communication.

In the embodiment, the discovery resource pool and a radio resource region for uplink cellular communication are arranged alternately in the time direction.

A user terminal comprises a controller configured to perform a D2D discovery procedure by using a discovery resource for the D2D discovery procedure for discovering a proximal terminal. A discovery resource pool in which the discovery resource is arranged is provided in a frequency band for uplink cellular communication. The discovery resource pool includes a first discovery resource pool in which a first discovery resource not uniquely assigned to a user terminal is arranged and a second discovery resource pool in which a second discovery resource uniquely assigned to each user terminal is arranged. The first discovery resource pool and the second discovery resource pool are arranged alternately in a time direction in a time interval shorter than a retransmission interval of the uplink cellular communication.

A processor according to an embodiment is provided in a user terminal. The processor executes a process of performing a D2D discovery procedure by using a discovery resource for the D2D discovery procedure for discovering a proximal terminal. A discovery resource pool in which the discovery resource is arranged is provided in a frequency band for uplink cellular communication. The discovery resource pool includes a first discovery resource pool in which a first discovery resource not uniquely assigned to a user terminal is arranged and a second discovery resource pool in which a second discovery resource uniquely assigned to each user terminal is arranged. The first discovery resource pool and the second discovery resource pool are arranged alternately in a time direction in a time interval shorter than a retransmission interval of the uplink cellular communication.

### [Embodiment]

Hereinafter, the embodiment in a case where the present application is applied to an LTE system will be described.

### (System Configuration)

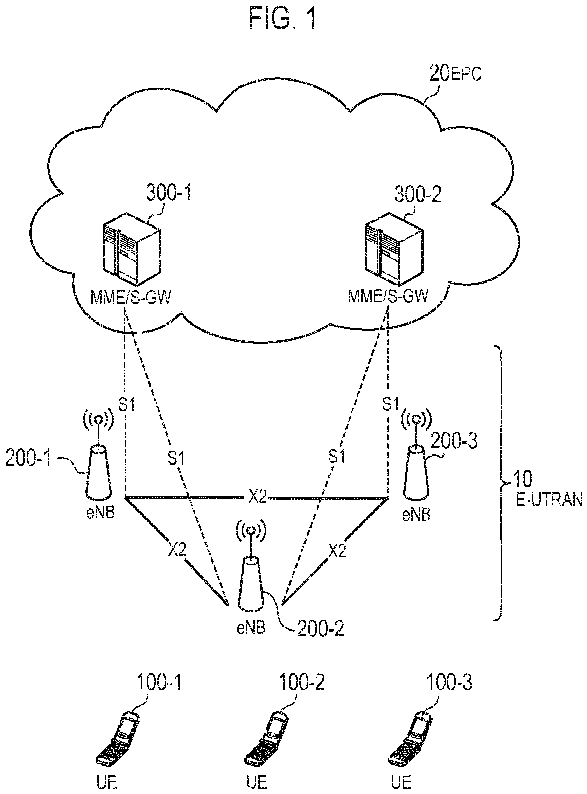

Fig. 1 is a configuration diagram of an LTE system according to an embodiment. As shown in Fig. 1, the LTE system according to the embodiment includes UEs (User Equipments) 100, E-UTRAN (Evolved-UMTS Terrestrial Radio Access Network) 10, and EPC (Evolved Packet Core) 20.

The UE 100 corresponds to a user terminal. The UE 100 is a mobile communication device and performs radio communication with a connected cell (a serving cell). Configuration of the UE 100 will be described later.

The E-UTRAN 10 corresponds to a radio access network. The E-UTRAN 10 includes eNBs 200 (evolved Node-Bs). The eNB 200 corresponds to a base station. The eNBs 200 are connected mutually via an X2 interface. Configuration of the eNB 200 will be described later.

The eNB 200 manages a cell or a plurality of cells and performs radio communication with the UE 100 that establishes a connection with the cell of the eNB 200. The eNB 200, for example, has a radio resource management (RRM) function, a function of routing user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. A network of the LTE system (a LTE network) is configured by the E-UTRAN 10 and the EPC 20. The EPC 20 includes MME (Mobility Management Entity)/S-GW (Serving-Gateway) 300. The MME performs various mobility controls and the like, for the UE 100. The S-GW performs control to transfer user data. The MME/S-GW 300 is connected to the eNB 200 via an S1 interface.

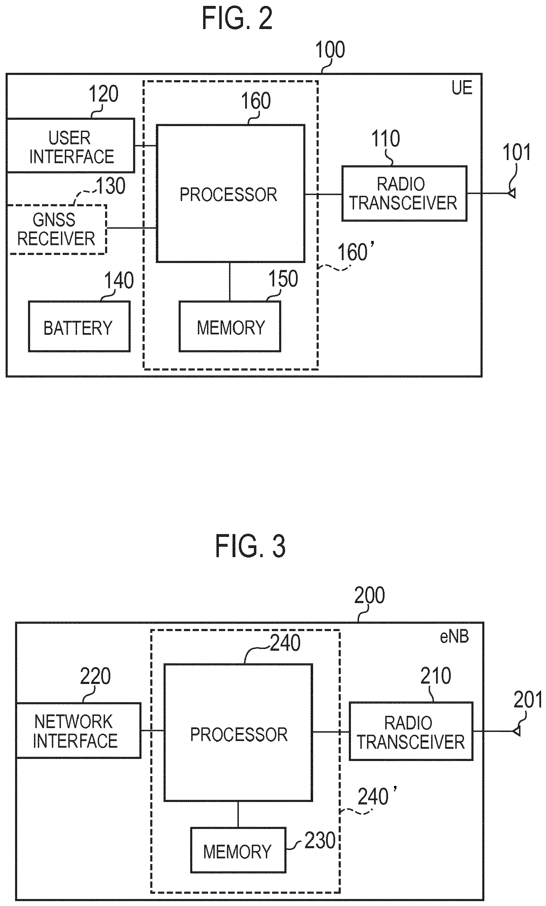

Fig. 2 is a block diagram of the UE 100. As shown in Fig. 2, the UE 100 includes an antenna 101, a radio transceiver 110, a user interface 120, GNSS (Global Navigation Satellite System) receiver 130, a battery 140, a memory 150, and a processor 160. The memory 150 corresponds to a storage unit, and the processor 160 corresponds to a control unit. The UE 100 may not have the GNSS receiver 130. Furthermore, the memory 150 may be integrally formed with the processor 160, and this set may be a processor 160' constituting the control unit.

The antenna 101 and the radio transceiver 110 are used to transmit and receive a radio signal. The radio transceiver 110 converts a baseband signal (a transmission signal) output from the processor 160 into the radio signal, and transmits the radio signal from the antenna 101. Furthermore, the radio transceiver 110 converts a radio signal (a reception signal) received by the antenna 101 into the baseband signal, and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 includes an antenna 201, a radio transceiver 210, a network interface 220, a memory 230, and a processor 240. It is note that the memory 230 may be integrated with the processor 240, and this set (that is, a chipset) may be a processor 240' constituting the control unit.

The antenna 201 and the radio transceiver 210 are used to transmit and receive a radio signal. The radio transceiver 210 converts a baseband signal (a transmission signal) output from the processor 240 into the radio signal, and transmits the radio signal from the antenna 201. Furthermore, the radio transceiver 210 converts a radio signal (a reception signal) received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

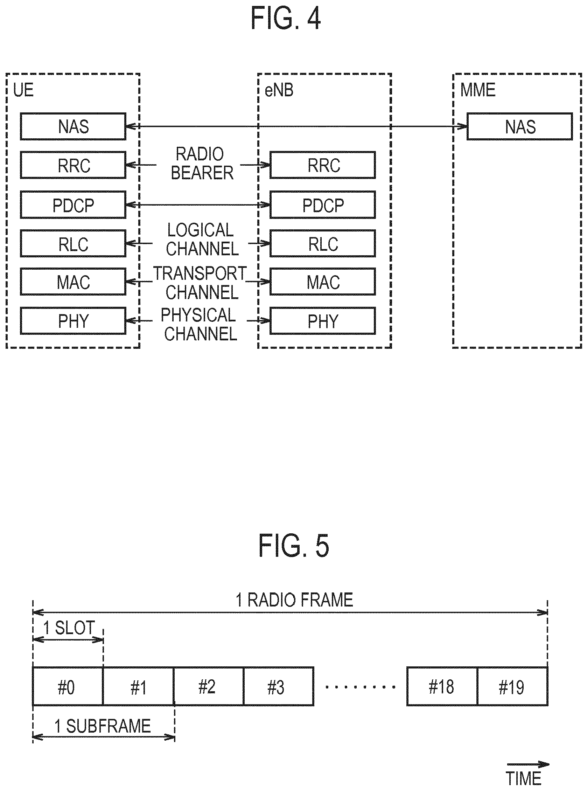

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes MAC (Medium Access Control) layer, RLC (Radio Link Control) layer, and PDCP (Packet Data Convergence Protocol) layer. The layer 3 includes RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted through the physical channel.

The MAC layer performs priority control of data, and a retransmission process and the like by hybrid ARQ (HARQ). Between the MAC layer of the UE 100 and the MAC layer of the eNB 200, user data and a control signal are transmitted via a transport channel. The MAC layer of the eNB 200 includes a transport format of an uplink and a downlink (a transport block size, a modulation and coding scheme) and a scheduler to decide (schedule) an allocated resource block to the UE 100.

The RLC layer transmits data to an RLC layer of a reception side by using the functions of the MAC layer and the PHY layer. Between the RLC layer of the UE 100 and the RLC layer of the eNB 200, user data and a control signal are transmitted via a logical channel.

The PDCP layer performs header compression and decompression, and encryption and decryption.

The RRC layer is defined only in a control plane handling a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When a connection (an RRC connection) is established between the RRC of the UE 100 and the RRC of the eNB 200, the UE 100 is in an RRC connected state, and when the connection is not established, the UE 100 is in an RRC idle state.

NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is employed in a downlink (DL), and SC-FDMA (Single Carrier Frequency Division Multiple Access) is employed in an uplink (UL), respectively.

As shown in Fig. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. A resource element is configured by one subcarrier and one symbol. Among radio resources allocated to the UE 100, a frequency resource is configured by a resource block and a time resource is configured by a subframe (or slot).

### (D2D proximity service)

A D2D proximity service will be described, below. The LTE system according to an embodiment supports the D2D proximity service. The D2D proximity service is described in Non Patent Document 1, and an outline thereof will be described here.

The D2D proximity service (D2D ProSe) is a service enabling direct UE-to-UE communication within a synchronization cluster including a plurality of synchronized UEs 100. The D2D proximity service includes a D2D discovery procedure (Discovery) in which a proximal UE is discovered and D2D communication (Communication) that is direct UE-to-UE communication. The D2D communication is also called Direct Communication.

A scenario in which all the UEs 100 forming the synchronization cluster are located inside a cell coverage is called "In coverage". A scenario in which all the UEs 100 forming the synchronization cluster are located outside a cell coverage is called "Out of coverage". A scenario in which some UEs 100 in the synchronization cluster are located inside a cell coverage and the remaining UEs 100 are located outside the cell coverage is called "Partial coverage".

In "In coverage", the eNB 200 is a D2D synchronization source, for example. A D2D asynchronization source, from which a D2D synchronization signal is not transmitted, is synchronized with the D2D synchronization source. The eNB 200 that is a D2D synchronization source transmits, by a broadcast signal, D2D resource information indicating a radio resource available for the D2D proximity service. The D2D resource information includes information indicating a radio resource available for the D2D discovery procedure (Discovery resource information) and information indicating a radio resource available for the D2D communication (Communication resource information), for example. The UE 100 that is a D2D asynchronization source performs the D2D discovery procedure and the D2D communication on the basis of the D2D resource information received from the eNB 200.

In "Out of coverage" or "Partial coverage", the UE 100 is a D2D synchronization source, for example. In "Out of coverage", the UE 100 that is a D2D synchronization source transmits D2D resource information indicating a radio resource available for the D2D proximity service, by a D2D synchronization signal, for example. The D2D synchronization signal is a signal transmitted in the D2D synchronization procedure in which a device-to-device synchronization is established. The D2D synchronization signal includes a D2DSS and a physical D2D synchronization channel (PD2DSCH). The D2DSS is a signal for providing a synchronization standard of a time and a frequency. The PD2DSCH is a physical channel through which more information can be conveyed than the D2DSS. The PD2DSCH conveys the above-described D2D resource information (the Discovery resource information and the Communication resource information). Alternatively, when the D2DSS is associated with the D2D resource information, the PD2DSCH may be rendered unnecessary.

In the D2D discovery procedure, a discovery signal for discovering a proximal terminal (hereinafter, "Discovery signal") is transmitted. Types of the D2D discovery procedure include: a first discovery type (Type 1 discovery) in which a radio resource not uniquely assigned to the UE 100 is used for transmitting a Discovery signal; and a second discovery type (Type 2 discovery) in which a radio resource uniquely allocated to each UE 100 is used for transmitting a Discovery signal. In the second discovery type, a radio resource individually allocated to each transmission of a Discovery signal or a radio resource allocated semi-persistently is used.

### (Discovery resource pool)

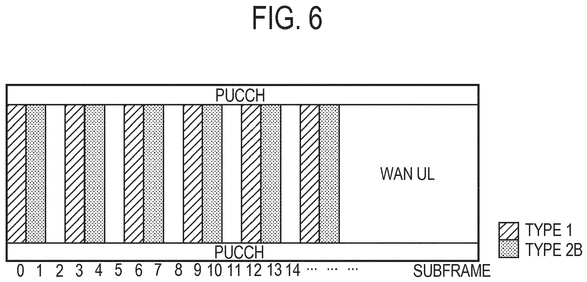

Next, a discovery resource pool (Discovery resource pool) in which a candidate radio resource used for a D2D discovery procedure is arranged will be described by using Fig. 6. Fig. 6 is a diagram for describing a discovery resource pool.

As shown in Fig. 6, a Discovery resource pool is provided in a frequency band for uplink cellular communication (WAN UL).

A Discovery resource pool includes a first Discovery resource pool used for a first discovery type and a second Discovery resource pool used for a second discovery type.

The first Discovery resource pool and the second Discovery resource pool are arranged alternately in the time direction in a time interval shorter than a retransmission interval (for example, 8-subframe interval) of uplink cellular communication. As a result, as shown in Fig. 6, even when the first Discovery resource pool and the second Discovery resource pool are subjected to time division multiplexing (TDM) in which the both resource pools do not overlap in the time direction, both the first Discovery resource pool and the second Discovery resource pool are available alternately in a short period of time. As a result, it is possible to avoid a case where one of the UE 100 using the first discovery type and the UE 100 using the second discovery type cannot perform the D2D discovery procedure for a long period of time.

It is noted that it is possible to avoid a problem (so-called Half-duplex problem) where the Discovery signal cannot be transmitted and received at the same time, for example, caused as a result of the first Discovery resource pool and the second Discovery resource pool not overlapping in the time direction.

In the present embodiment, the width in the time direction of each of the first Discovery resource pool and the second Discovery resource pool is one subframe. Further, each of the first Discovery resource pool and the second Discovery resource pool is arranged for each three subframes. Specifically, the first Discovery resource pool is arranged at a location having a subframe number of 0, 3, 6, 9, 12, etc. Further, the second Discovery resource pool is arranged at a location having a subframe number of 1, 4, 7, 10, 13, etc.

In the present embodiment, in the Discovery resource pool, the first Discovery resource pool is arranged first, which is followed by the second Discovery resource pool; however, these may be arranged reversely. For example, the first Discovery resource pool and the second Discovery resource pool may be arranged differently for each cell.

Further, at least during a fixed period, a cycle in the time direction of the first Discovery resource pool and a cycle in the time direction of the second Discovery resource pool may differ.

The width in the time direction of an uplink cellular resource region in which a candidate radio resource for uplink cellular communication is arranged, is one subframe. Further, the uplink cellular resource region is arranged for each three subframes. Specifically, the uplink cellular resource region is arranged at a location having a subframe number of 2, 5, 8, 11, 14, etc. Therefore, the uplink cellular resource region and the Discovery resource pool (specifically, the first Discovery resource pool and the second Discovery resource pool) are arranged alternately in the time direction. As a result, it is possible to avoid a case where the UE 100 cannot perform either the uplink cellular communication or the D2D discovery procedure for a long period of time.

It is noted that, as shown in Fig. 6, there may be an uplink cellular resource region of which the width in the time direction is above one subframe.

### [Other Embodiments]

In the aforementioned embodiment, as one example of a mobile communication system, the LTE system is described; however, the present invention is not limited to the LTE system, and the present application may be applied to a system other than the LTE system.

It is noted that the entire content of US Provisional Application No. 61/991030 (filed on May 9, 2014) is incorporated in the present specification by reference.

### [Additional statement]

### (1) Introduction

The issue of coexistence of D2D discovery and WAN is discussed. In this additional statement the multiplexing of D2D discovery and WAN is considered.

### (2) Resource allocation for D2D discovery

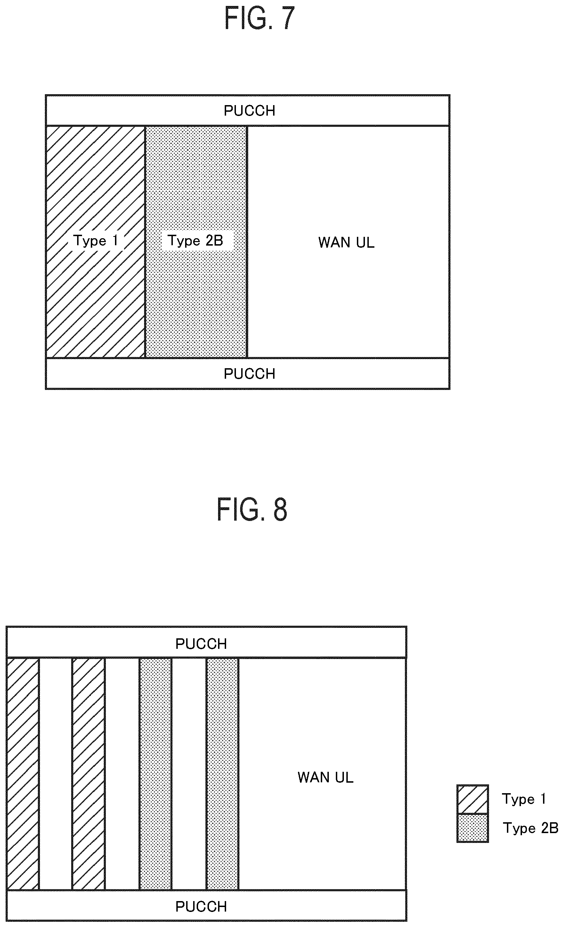

In this section the allocation of D2D discovery resource pool is discussed. The multiplex of D2D discovery resource pool and WAN UL have some issues such as half-duplex constraint, interferences caused by in-band emission, UL throughput impact and UL latency impact. As shown in Fig. 7, Type 1 discovery, Type 2 discovery and WAN UL should be multiplexed in TDM manner because of half-duplex constraint and interferences caused by in-band emission.

Proposal 1: Type 1 discovery, Type 2 discovery and WAN UL should be TDMed.

However, a contiguous allocation of Type 1 and Type 2 discovery may impact UL WAN latency. In this case, the WAN UL resources can be inserted between Type 1 and Type 2 discovery regions as shown in Fig. 8. Restrictions on D2D discovery resources should be specified and WAN UL allocation should be left to eNB implementation.

Proposal 2: Time contiguous allocation for D2D discovery resource pool should not be supported.

Proposal 3: WAN UL allocation restriction should not be introduced in specification.

For further improvement, it can be considered to introduce time diversity for Type 1 and Type 2 discovery. Fig. 6 is an example of the multiplex of Type 1, Type 2 WAN UL under consideration of time diversity gain.

### INDUSTRIAL APPLICABILITY

As described above, the embodiment-based mobile communication system, user terminal, and processor enable appropriate arrangement of a discovery resource pool arranged in a frequency band for uplink cellular communication, and thus are useful in the field of mobile communication.

## Claims

1. A mobile communication system, wherein
a discovery resource pool in which a discovery resource for a D2D discovery procedure for discovering a proximal terminal is arranged is provided in a frequency band for uplink cellular communication,
the discovery resource pool includes a first discovery resource pool in which a first discovery resource not uniquely assigned to a user terminal is arranged and a second discovery resource pool in which a second discovery resource uniquely assigned to each user terminal is arranged, and
the first discovery resource pool and the second discovery resource pool are arranged alternately in a time direction in a time interval shorter than a retransmission interval of the uplink cellular communication.

2. The mobile communication system according to claim 1, where
the discovery resource pool and a radio resource region for uplink cellular communication are arranged alternately in the time direction.

3. A user terminal comprising:
a controller configured to perform a D2D discovery procedure by using a discovery resource for the D2D discovery procedure for discovering a proximal terminal, wherein
a discovery resource pool in which the discovery resource is arranged is provided in a frequency band for uplink cellular communication,
the discovery resource pool includes a first discovery resource pool in which a first discovery resource not uniquely assigned to a user terminal is arranged and a second discovery resource pool in which a second discovery resource uniquely assigned to each user terminal is arranged, and
the first discovery resource pool and the second discovery resource pool are arranged alternately in a time direction in a time interval shorter than a retransmission interval of the uplink cellular communication.

4. A processor provided in a user terminal, wherein
the processor is configured to execute a process of performing a D2D discovery procedure by using a discovery resource for the D2D discovery procedure for discovering a proximal terminal,
a discovery resource pool in which the discovery resource is arranged is provided in a frequency band for uplink cellular communication,
the discovery resource pool includes a first discovery resource pool in which a first discovery resource not uniquely assigned to a user terminal is arranged and a second discovery resource pool in which a second discovery resource uniquely assigned to each user terminal is arranged, and
the first discovery resource pool and the second discovery resource pool are arranged alternately in a time direction in a time interval shorter than a retransmission interval of the uplink cellular communication.
